# EUROPEAN PATENT SPECIFICATION

(11) **EP 1 541 260 B1**
(45) Date of publication and mention of the grant of the patent: **29.10.2008**
(21) Application number: 03792816.5
(22) Date of filing: 22.08.2003
(51) Int. Cl.: B22D 11/10, B22D 41/18, B22D 41/32, B22D 41/54

(54) **METHOD FOR CONTINUOUS CASTING OF MOLTEN STEEL FOR THIN SHEET**
VERFAHREN ZUM STRANGGIESSEN VON GESCHMOLZENEM STAHL ZU DÜNNBLECH
PROCEDE DE COULEE EN CONTINU D'ACIER EN FUSION POUR TOLE MINCE

(30) Priority: 22.08.2002 JP 2002242731
(43) Date of publication of application: 15.06.2005
(73) Proprietor: Krosakiharima Corporation, Kitakyushu-shi, Fukuoka 806-8586 (JP); LWB Refractories Company, York, PA 17405-1189 (US)
(72) Inventor: OGATA, Koji c/o KROSAKIHARIMA CORPORATION, Kitakyushu-shi, Fukuoka 806-8586 (JP); KIMURA, Haruyoshi c/o Kimitsu Branch,, Kimitsu-shi, Chiba 299-1141 (JP); HOOVER, Donald Bruce, York, PA 17403 (US)
(74) Representative: Vossius & Partner
(86) International application number: PCT/JP2003/010673
(87) International publication number: WO 2004/018127

(56) References cited:
- JP-A- 1 075 155
- JP-A- 10 025 167
- JP-A- 11 285 792
- PATENT ABSTRACTS OF JAPAN vol. 2000, no. 15, 6 April 2001 (2001-04-06) & JP 2000 334550 A (SUMITOMO METAL IND LTD), 5 December 2000 (2000-12-05)
- PATENT ABSTRACTS OF JAPAN vol. 1996, no. 08, 30 August 1996 (1996-08-30) & JP 08 103865 A (SUMITOMO METAL IND LTD), 23 April 1996 (1996-04-23)
- PATENT ABSTRACTS OF JAPAN vol. 014, no. 069 (M-0932), 8 February 1990 (1990-02-08) & JP 01 289549 A (KAWASAKI REFRACT CO LTD), 21 November 1989 (1989-11-21)

## Description

### TECHNICAL FIELD

The present invention relates to continuous casting of molten steel to be formed as a sheet metal, and more particularly to a refractory material for use in the continuous casting.

### BACKGROUND ART

In late years, the need for strict quality control of steel products has become increasingly prominent. Under these circumstances, in the continuous casting of aluminum-deoxidized steel (hereinafter referred to as "aluminum-killed steel") to be formed as high-quality steel, such as sheet metal, a good deal of effort has been made to prevent alumina from being attached onto a casting nozzle for pouring molten steel from a tundish into a mold.

The alumina attached onto the casting nozzle will be combinedly accumulated, and formed as a large-size impurity. Then, the alumina will be mixed in molten steel flow, and incorporated into slabs as a large-size inclusion to cause defect in slabs or deterioration in quality thereof.

As one of measures against this problem, there has been known a method comprising injecting argon gas from the inner surface of a casting nozzle toward molten steel to physically prevent the attachment of alumina. However, if an excessive amount of argon gas is injected, resulting gas bubbles will be incorporated into slabs to cause the formation of pinholes or defect. Thus, this method is not exactly a sufficient measure due to the restriction in the allowable injection amount of argon gas.

There has also been known a method intended to provide an anti-alumina-buildup function to a refractory material itself. This method is directed to prevent the buildup of alumina by preparing a refractory brick containing CaO and causing the reaction between CaO and alumina attached to the brick to form a low-melting-point compound. For example, Japanese Patent Laid-Open Publication No. 11-506393 discloses a casting nozzle using a refractory martial comprising in combination graphite, and dolomite clinker having a primary component consisting of CaO and MgO.

In order to obtain the anti-alumina-buildup function, this material can be applied to the surface of an inner hole of a submerged nozzle for casting of aluminum-killed steel. In this case, while the amount of alumina to be attached on the surface of the inner hole of the submerged nozzle is actually reduced, a large-size inclusion is often detected from slabs to be formed as a sheet metal. The inclusion causes occurrence of flaws in a rolling process of the slabs. In particular, the inclusion has a serious impact on slabs to be formed as a thin sheet metal.

### DISCLOSURE OF INVENTION

It is therefore an object of the present invention to provide a refractory material for use in a continuous casting nozzle, which contains CaO · MgO-based clinker having CaO as a mineral phase having an anti-alumina-buildup effect, so as to allow the amount of a large-size inclusion in slabs during casting of aluminum-killed steel to be drastically reduced.

Through various researches on inclusions detected from slabs in case of using a continuous casting nozzle made of a refractory material containing CaO · MgO-based clinker having an anti-alumina-buildup effect, the inventors found that large-size inclusions having a diameter of 50 µm or more comprise magnesia as a primary component. The inventors assumed that the magnesia as the inclusions was originated from the refractory material containing CaO · MgO-based clinker.

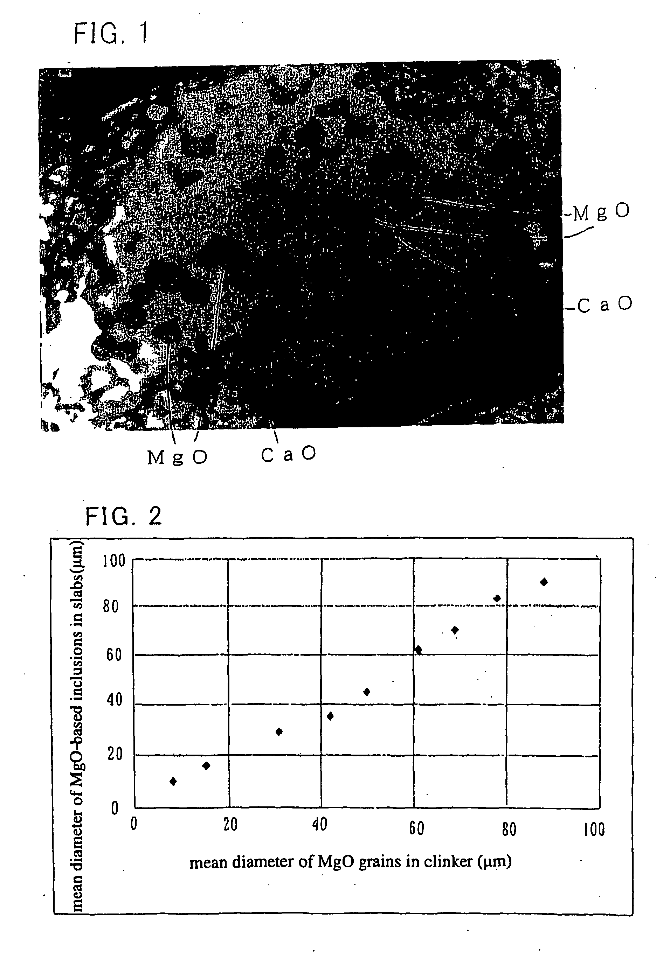

FIG. 1 shows the distribution state of MgO in CaO · MgO-based clinker by an electron micrograph. As seen in this electron micrograph, MgO grains are independently dispersed over the CaO · MgO-based clinker in the form of small grains, because no compound is formed between CaO and MgO.

And FIG. 2 shows the relationship between the mean diameter of MgO paticles in the CaO · MgO-based clinker and the size of MgO inclusion in a cast aluminum-killed slab obtained by using CaO · MgO-based clinker as shown in the electron micrograph of FIG. 1. As seen in FIG. 2, it is proved that there is a positive correlation between the size of the MgO grain particles in the clinker and the size of the inclusions, and the size of the MgO grain particles is analogous to the size of the inclusions.

When a refractory material containing CaO · MgO-based clinker is used in a refractory component of a continuous casting apparatus for casting aluminum-killed steel, at the surface of the refractory to be in contact with molten steel, alumina dispersed over the steel reacts with CaO in the CaO·MgO-based clinker to form an Al₂O₃·CaO-based low-melting-point compound, and the low-melting-point compound is then spilled off from the surface of the refractory component with the flow of the molten steel.

The Al₂O₃ · CaO-based compound released from the surface of the refractory component is readily dispersed over the molten steel, and less apt to be formed as a large-size inclusion. Thus, an adverse affect on the quality of slabs can be minimized.

Even if the Al₂O₃ · CaO-based compound has a large size, it will be relatively harmless because it is relatively soft, and can be thinly drawn out in a rolling process.

In contrast, MgO in the clinker is apt to flow in the molten steel while maintaining its original grain size, due to its low reactivity as compared to CaO. Further, MgO has a high melting point and high hardness. If a large-size MgO grain is mixed in slabs, it will cause flaws in the rolling process or deterioration in quality of the slabs. In addition, it is often the case that the diameter of MgO crystal grains in the clinker is equal to that of MgO-based inclusions in the slabs as shown in FIG. 2, because MgO in the clinker is apt to flow in the molten steel while maintaining its original grain size. Thus, in view of reducing the amount of large-size inclusions in slabs, it is essential to miniaturize MgO crystal grains in the CaO · MgO-based clinker.

Based on the above knowledge, in order to solve the problem of the MgO-based inclusions caused by the CaO · MgO-based clinker-containing refractory material for use in a continuous casting apparatus for molten steel to be formed as a sheet metal, the present invention provides a refractory material containing 20 mass% or more of CaO · MgO-based clinker as defined in claim 1. In the refractory material, 60% or more of MgO grains have a diameter of 50 µm or less. The refractory material is used at least at a portion of a continuous casting apparatus to be in contact with molten steel.

Generally, in view of sheet metal products, it is desired to minimize inclusions having a diameter of 50 µm or more, and to reduce the diameter of MgO grains in CaO · MgQ-based clinker as much as possible. In a practical sense, if 60% or more of MgO grains in the clinker have a diameter of 50 µm or less, the casting of aluminum-killed steel for sheet metal can be performed without any problem. Thus, the CaO · MgO-based clinker is prepared to allow 60% or more of MgO grains therein to have a diameter of 50 µm or less. In particular, steel for beverage tin cans is required to be free of inclusion having a diameter of 50 µm or more. Thus, in a casting process of molten steel to be formed as beverage tin cans, it is desired to use clinker containing MgO crystal grains having a smaller mean diameter, for example, of 20 µm or less. The diameter of MgO grain in the CaO · MgO-based clinker herein is determined by separating MgO crystal grains and CaO grains in an electron micrograph of the clinker from each other using an image analysis apparatus, converting the area of each of the MgO grains into a circular area, and measuring the diameter of the circular area.

According to preparation methods, CaO · MgO-based clinker is classified into three types: synthetic dolomite clinker, natural dolomite clinker and electro-fused CaO · MgO-based clinker. The synthetic dolomite clinker is prepared by burning mixed particles of Ca (OH)₂ and Mg (OH)₂ at a high temperature. The natural dolomite clinker is prepared by burning dolomite as a natural product at a high temperature. The electro-fused CaO · MgO-based clinker is prepared by arc-melting a material containing CaO components and MgO components, and cooling/solidifying the arc-melted material. The diameter of MgO crystal grains in the synthetic CaO · MgO-based clinker can be changed by controlling the particle size of a starting material. Specifically, Mg (OH)₂ particles in the starting material can be arranged to have a small particle size and enhanced dispersibility to reduce the diameter of MgO crystal grains in the clinker.

The diameter of MgO grains in the natural dolomite clinker is varied depending on native dolomite minerals. Thus, the natural dolomite clinker can be prepared by using one native dolomite mineral providing a desired diameter of MgO grains. The diameter of MgO crystal grains in the electro-fused CaO · MgO-based clinker can be controlled by adjusting the cooling rate in the solidification process.

In dolomite clinker prepared by using natural dolomite, the chemical components of CaO and MgO have an approximately constant mass ratio of about 60 : 40 (CaO : MgO). By contrast, in the synthetic dolomite clinker and the electro-fused CaO · MgO-based clinker, the mass ratio of CaO : MgO can be freely changed. In this case, if the MgO component is excessively increased, MgO crystal grains will be combined with each other to form an undesirably enlarged MgO crystal grain. Thus, the content of MgO is preferably set to be less than 50 mass%.

The refractory material containing 20 mass% or more of CaO · MgO-based clinker may be prepared by adding an organic binder to CaO · MgO-based clinker, uniformly kneading the compound to form a green body, and burning the green body at about 1600°C, or by adding phenol resin and 10 to 40% of graphite to CaO · MgO-based clinker, uniformly kneading the compound to form a green body, and burning the green body at about 1000°C in a reduction atmosphere. Through this process, the refractory material can have an anti-alumina-buildup function.

For example, the refractory material without containing graphite is suitable for use in a refractory component of a continuous casting apparatus which is applied with relatively low thermal shock in use, such as an upper nozzle, a sliding nozzle, a lower nozzle or a stopper head. The refractory material containing graphite is suitable for use in a refractory component of a continuous casting apparatus which is applied with relatively high thermal shock in use, such as a submerged nozzle, a long nozzle, or a long stopper. However, the use of such refractory materials is not limited to the above examples. What is important is to appropriately adjust the amount of graphite depending on use conditions.

In view of the anti-alumina-buildup effect, in addition to 20 mass% or more of CaO · MgO-based clinker including CaO, the refractory material of the present invention may contain carbon or another clinker, such as CaO clinker, ZrO₂ clinker, ZrO₂ · CaO clinker and/or MgO clinker. When the refractory material is used in a portion of a continuous casting apparatus having a heavy fusion damage in use, the MgO grain size should be adequately adjusted to prevent deterioration in quality of slabs due to outflow of the clinker into molten steel. Further, while a slight amount of Fe₂O₃, SiO₂, Al₂O₃ and/or ZrO₂ may be added to the clinker, it is desired to limit the amount of the additive within 10 mass%, because an excessive amount of the additive is likely to cause deterioration in corrosion resistance and/or anti-alumina-buildup function.

While the CaO · MgO-based refractory material can be applied to any refractory component for use in a continuous casting apparatus, such as a submerged nozzle, an upper nozzle, a lower nozzle, a sliding nozzle, a long nozzle, a stopper head, and a long stopper, it may be used in a given portion of such a refractory component to bring out an intended effect therein. In particular, the refractory material may be limitedly used in a portion of the refractory component to which a large amount of alumina is to be attached. For example, when the refractory material is used in one of the above nozzles, instead of making the entire nozzle of the refractory material, only the surface of the inner hole of the nozzle to be in contact with molten steel may be made of the refractory material to bring out an intended function sufficiently.

In the case of using the refractory material only in the surface of the inner hole of the nozzle, a green body of the composition according to the present invention may be placed on the inner surface and simultaneously shaped with the nozzle body or the composition according to the present invention may be inserted into the innerhole after shaped and baked into a sleeve and a ring, alternatively.

When the refractory material is used in the stopper head or long stopper, only the outer surface of the stopper head or long stopper to be in contact with molten steel may be made of the refractory material.

While the refractory material of the present invention is suitable for continuous casting of aluminum-killed steel, particularly aluminum-killed steel to be formed as a sheet metal, it may also be effectively applied to continuous casting of Al-Si killed steel, Al-Ti killed steel or Ti killed steel.

### BRIEF DESCRIPTION OF DRAWINGS

FIG. 1 is an electron micrograph showing the grain structure of CaO · MgO-based clinker.
FIG. 2 is a graph showing the relationship between the mean diameter of MgO grains in the clinker and the mean diameter of MgO-based inclusions in slabs.

### BEST MODE FOR CARRYING OUT THE INVENTION

A preferred embodiment of the present invention will now be described in connection with examples.

### [EXAMPLE 1]

A plurality of samples different in mean diameter of MgO crystal grains were prepared by changing the cooling rate of electro-fused CaO · MgO-based clinker having a chemical composition of 58 mass% of CaO and 41 mass% of MgO. Table 1 shows the respective mean diameters (µm) of the prepared clinkers.

**Table 1**

| MgO crystal | A | B | C | D | E | F | G | H | I |
|---|---|---|---|---|---|---|---|---|---|
| mean diameter (µ m) | 8 | 15 | 31 | 42 | <50 | 61 | 69 | 78 | 88 |

The samples A to E are clinkers for Inventive Examples. For example, in the sample E, 60% or more of MgO crystal grains in the clinker have a diameter of 50 µm or less. The samples F to I are clinkers for Comparative Examples. In the samples F to I, 60% or more of MgO crystal grains in each of the clinkers have a diameter of greater than 50 µm.

Table 2 shows the compounding rate of each of compounds prepared by adding graphite and phenol resin to the respective clinkers in Table 1, and the frequency index of the occurrence of flaws during a rolling process in each of the compounds.

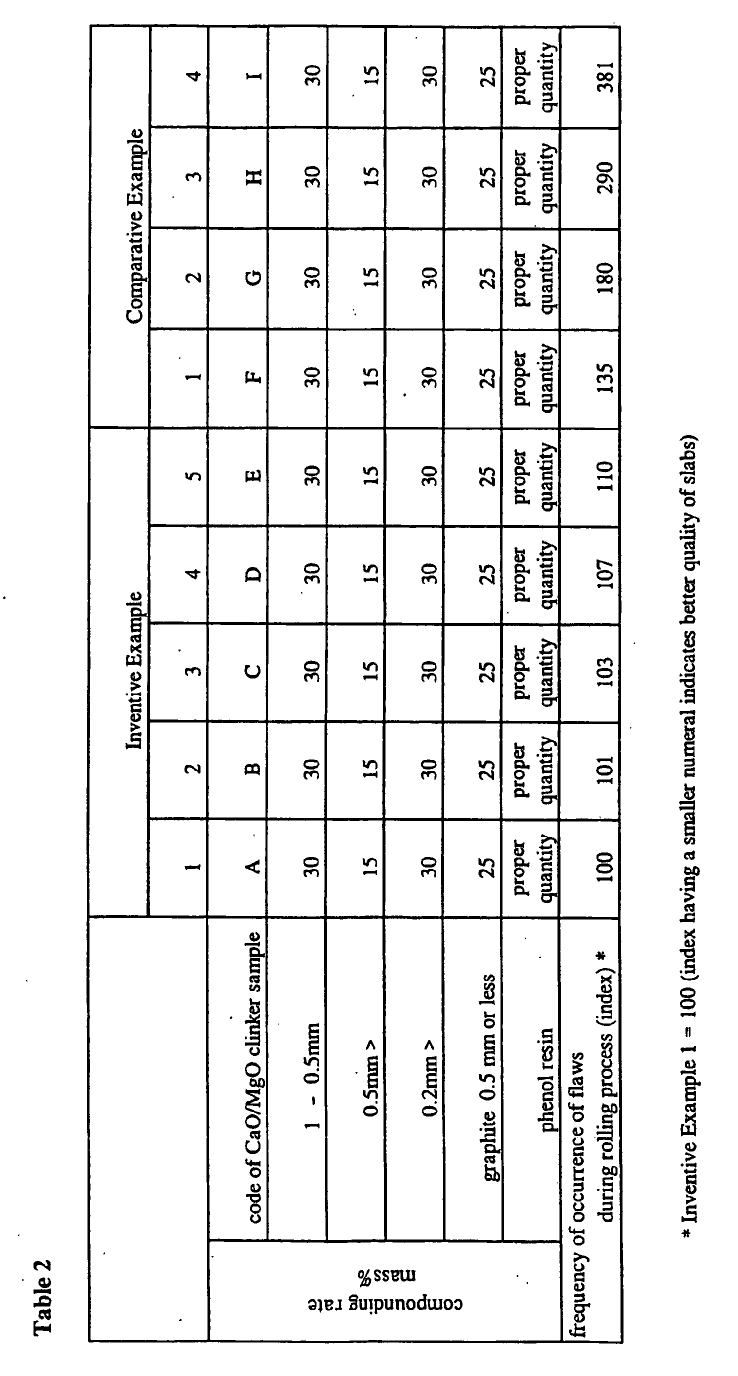

Each of submerged nozzles serving as test pieces was prepared by forming a green body which has a powder line portion using a zirconia/graphite material and a nozzle body with an inner hole using each of the compounds in Table 2, through CIP forming at a forming pressure of 1000 kg/cm², and burning the green body at a maximum temperature of 1000 °C in a reduction atmosphere.

Each of the submerged nozzles was used for continuous casting of aluminum-killed steel, and the quality of obtained slabs was checked. The casting was carried out under the conditions of a ladle volume: 250 ton, a TD volume: 45 ton, and a draw speed of slabs: 1.0 to 1.3 m/min.

The obtained slabs were milled to a sheet metal having a thickness of 2 mm, and the frequency of occurrence of flaws due to MgO-based inclusions was checked. The frequency of occurrence was indexed by defining the frequency of Inventive Example 1 as 100. The index having a smaller numeral indicates better quality of slabs. This test result shows that the quality of slabs is drastically improved in Inventive Examples where 60% or more of MgO crystal grains in the clinker have a diameter of 50 µm or less, as compared to Comparative Examples where the mean diameter is greater than 50 µm

### [EXAMPLE 2]

Table 3 shows the compounding rate of each of compounds prepared by uniformly kneading the respective CaO · MgO-based clinkers A to I in Table 1 and polypropylene added thereto, and the frequency index of the occurrence of flaws during a rolling process in each of the compounds. Each of upper nozzles serving as test pieces was prepared by forming a green body using each of the compounds in Table 3, through press forming at a forming pressure of 1200 kg/cm², and burning the green body at a temperature of 1600 °C. Each of the upper nozzles was used for continuous casting of aluminum-killed steel under the same conditions as those in EXAMPLE 1, and the quality of obtained slabs was checked. This test result shows that the quality of slabs is drastically improved in Inventive Examples where 60% or more of MgO crystal grains in the clinker have a diameter of 50 µm or less.

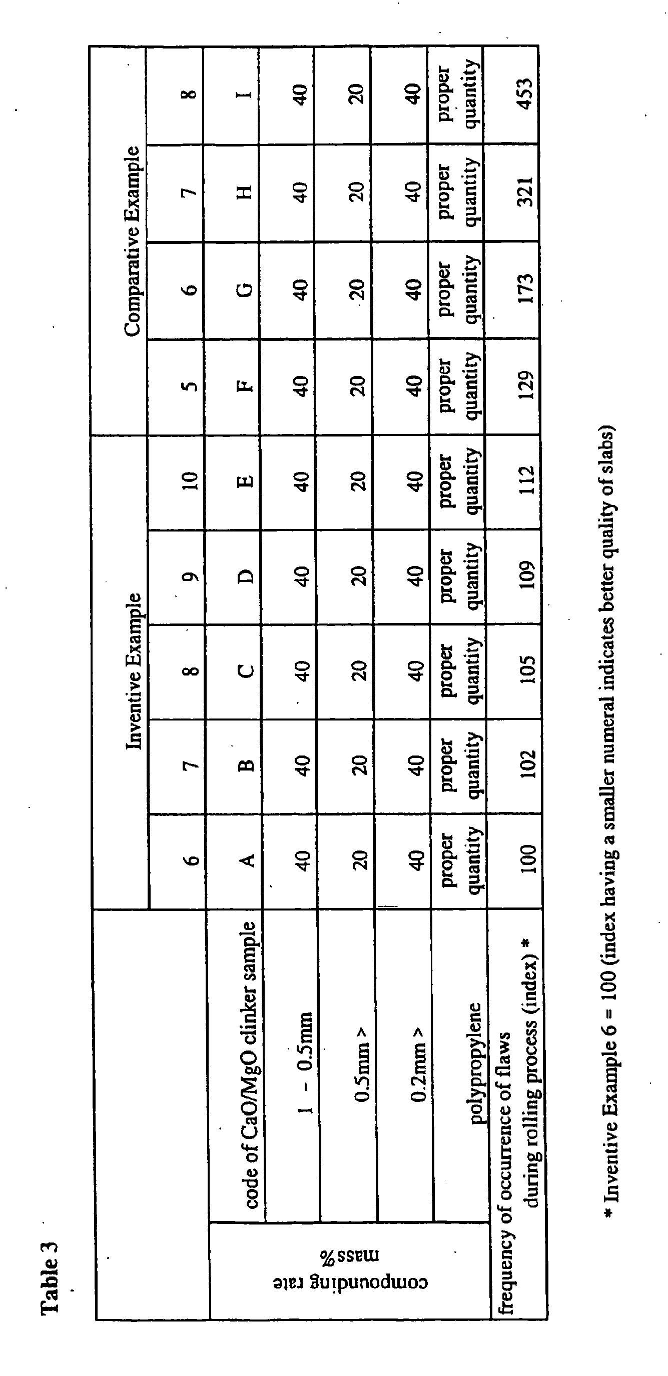

As mentioned above, the refractory material and the method for use in continuous casting of molten steel for sheet metal can reduce the mean diameter of MgO grains as inclusions in slabs obtained through the continuous casting. Thus, the frequency of occurrence of flaws in the milled sheet metal can be reduced to achieve a higher quality level of sheet metal products and the reduction of production cost.

### INDUSTRIAL APPLICABILITY

The refractory material and the method of using the refractory material of the present invention can be used in continuous casting of molten steel for sheet metal, particularly aluminum-killed steel for sheet metal.

## Claims

1. A method of continuous casting of molten steel for sheet metal,
a) using a refractory material at least at a portion to be in contact with molten steel, wherein
b) the refractory material consists of
b1) at least 20% CaO MgO-based clinker,
b1a) wherein at least 60% of the MgO grains included in the grains of said CaO MgO-based clinker have a diameter of 50 µm or less,
b2) 10-40% graphite,
b3) optionally up to 10% in total of Fe₂O₃, SiO₂, Al₂O₃ and/or ZrO₂, and
b4) further optionally CaO clinker, ZrO₂ clinker, ZrO₂ · CaO clinker and/or MgO clinker.

2. A method of continuous casting of a high grade sheet of molten steel of claim 1, said refractory being applied onto the inner hole and simultaneously molded with the outer refractory material.

3. A method of continuous casting of molten steel of a high grade sheet of claim 1, said refractory being applied onto the inner hole by insertion in the form of a sleeve.

4. A method of continuous casting of a high grade sheet of molten steel of any one of claims 1 to 3 is applied to casting of Al killed steel, Al-Si killed steel, Al-Ti killed steel and Ti killed steel.

## Patentansprüche

1. Verfahren zum Stranggießen von geschmolzenem Stahl zum Herstellen eines Metallblechs,
a) unter Verwendung eines Feuerfestmaterials mindestens an einem Abschnitt, der dazu vorgesehen ist, mit dem geschmolzenem Stahl in Kontakt zu kommen, wobei
b) das Feuerfestmaterial besteht aus
b1) mindestens 20% Klinker auf CaO-MgO-Basis,
b1a) wobei mindestens 60% der in den Körner des Klinker auf CaO-MgO-Basis enthaltenen MgO-Körner einen Durchmesser von 50 µm oder weniger haben;
b2) 10 - 40% Graphit;
b3) optional bis zu insgesamt 10% Fe₂O₃, SiO₂, Al₂O₃ und/oder ZrO₂, und
b4) ferner optional CaO-Klinker, ZrO₂-Klinker, ZrO₂·CaO-Klinker und/oder MgO-Klinker.

2. Verfahren nach Anspruch 1 zum Stranggießen von geschmolzenem Stahl zum Herstellen eines Qualitätsstahlblechs, wobei das Feuerfestmaterial auf die Innenöffnung aufgebracht und gleichzeitig mit dem äußeren Feuerfestmaterial geformt wird.

3. Verfahren nach Anspruch 1 zum Stranggießen von geschmolzenem Stahl zum Herstellen eines Qualitätsstahlblechs, wobei das Feuerfestmaterial durch Einsetzen in Form einer Manschette auf die Innenöffnung aufgebracht wird.

4. Verfahren nach einem der Ansprüche 1 bis 3 zum Stranggießen von geschmolzenem Stahl zum Herstellen eines Qualitätsstahlblechs, wobei das Verfahren auf das Gießen eines Al-beruhigten Stahls, eines Al-Si-beruhigten Stahls, eines Al-Ti-beruhigten Stahls und eines Ti-beruhigten Stahls angewendet wird.

## Revendications

1. Procédé de coulée en continu d'acier en fusion pour tôle de métal,
a) en utilisant un matériau réfractaire au moins au niveau d'une partie destinée à être en contact avec de l'acier en fusion, dans lequel
b) le matériau réfractaire comprenant
b1) au moins 20 % de laitier à base de CaO-MgO,
b1a) dans lequel au moins 60 % des grains de MgO inclus dans les grains dudit laitier à base de CaO-MgO ont un diamètre de 50 µm ou moins,
b2) 10 à 40 % de graphite,
b3) facultativement jusqu'à 10 % au total de Fe₂O₃, SiO₂, Al₂O₃ et/ou ZrO₂, et
b4) de plus facultativement du laitier à CaO, du laitier de ZrO₂, du laitier de ZrO₂·CaO et/ou du laitier de MgO.

2. Procédé de coulée en continu d'une feuille de qualité supérieure d'acier en fusion selon la revendication 1, ledit matériau réfractaire étant appliqué sur le trou interne et simultanément moulé avec le matériau réfractaire externe.

3. Procédé de coulée en continu d'une feuille de qualité supérieure d'acier en fusion selon la revendication 1, ledit matériau réfractaire étant appliqué sur le trou interne par insertion sous la forme d'un manchon.

4. Procédé de coulée en continu d'une feuille de qualité supérieure d'acier en fusion selon l'une quelconque des revendications 1 à 3, mis en oeuvre en coulant de l'acier calmé à l'Al, de l'acier calmé à l'Al-Si, de l'acier calmé à l'Al-Ti et de l'acier calmé au Ti.
